Europäisches Patentamt

European Patent Office

Office européen des brevets

(19)

(11) EP 1 217 359 A1

(12) EUROPEAN PATENT APPLICATION

(43) Date de publication:
26.06.2002 Bulletin 2002/26

(51) Int Cl.7: G01N 27/00

(21) Numéro de dépôt: 01403308.8

(22) Date de dépôt: 20.12.2001

(84) Etats contractants désignés:
AT BE CH CY DE DK ES FI FR GB GR IE IT LI LU
MC NL PT SE TR
Etats d'extension désignés:
AL LT LV MK RO SI

(30) Priorité: 20.12.2000 FR 0016696

(71) Demandeur: TOTAL RAFFINAGE DISTRIBUTION
S.A.
92800 Puteaux (FR)

(72) Inventeurs:
• Belghazi, Ahmed
76280 Criquetot l'Esneval (FR)

• Simonet, Coralie
76600 Le Havre (FR)
• Chevrot, Thierry
73190 Challes le Eaux (FR)
• Rousseau, Philippe
75020 Paris (FR)
• Perrot, Hubert
41300 Salbris (FR)
• Gabrielli, Claude
92500 Rueil Malmaison (FR)

(74) Mandataire: Jolly, Jean-Pierre et al
Cabinet Jolly
54, rue de Clichy
75009 Paris (FR)

(54) **Procédé de mesure du pouvoir entartrant d'un liquide et microbalance à quartz pour la mise en oeuvre de ce procédé**

(57)    L'invention concerne un procédé et une microbalance à quartz pour la mesure du pouvoir entartrant d'un liquide.

La microbalance à quartz (10) comprend une lame de quartz (11) comprise entre une électrode d'excitation supérieure appelée électrode de travail (12) et une électrode d'excitation inférieure (14) reliées à un oscillateur (55) pour faire vibrer la lame de quartz à une de ses fréquences de résonance. Elle comprend également des moyens de chauffage (20, 22, 56) de l'électrode d'excitation inférieure (14), des moyens de mesure de température (12, 24, 58) pour mesurer en continu la température de l'électrode de travail (12), des moyens de régulation du chauffage (61) destinés à maintenir l'électrode de travail (12) à une température constante égale à la température réelle d'utilisation du liquide, et des moyens de mesure de fréquence (59) pour mesurer en continu la fréquence de vibration de la lame de quartz.

FIG.4

## Description

DOMAINE DE L'INVENTION

La présente invention se situe dans le domaine de l'analyse et du traitement des liquides, et concerne plus particulièrement un procédé pour la mesure du pouvoir entartrant par voie thermique d'un liquide, ainsi que le dispositif associé, constitué essentiellement d'une microbalance à quartz, pour la mise en oeuvre de ce procédé.

PROBLEME A RESOUDRE.

On sait que l'entartrage d'une surface, métallique ou non, se produit quand un dépôt d'origine minérale, en provenance d'un liquide en contact avec cette surface, s'incruste sur celle-ci dans des conditions particulières de température du fluide et de la surface, de pH du liquide et de quantités de sels solubles susceptibles de précipiter. Contrairement au simple dépôt non adhérent provenant d'une sédimentation, l'entartrage provoque des dépôts présentant de fortes liaisons avec la surface servant alors de support, pouvant même provoquer entre autres inconvénients, des dégradations importantes de cette surface.

En particulier, dans les circuits de réfrigération alimentés par de l'eau, l'entartrage des tuyaux des échangeurs de chaleur est principalement lié à la formation de carbonate de calcium, provoquée par la diminution de la solubilité du gaz carbonique contenu dans l'eau de refroidissement, en même temps qu'augmente la température de la couche limite d'eau au voisinage de la surface du tube.

Dans les échangeurs de chaleur, ce processus d'entartrage est d'autant plus important que la température de la paroi du tube au contact du fluide atteint des valeurs de fonctionnement élevées, par exemple 90°c, alors que la température au sein du fluide, se situe généralement entre 25°C et 35°C.

Or, l'entartrage des tubes des échangeurs de chaleur fonctionnant par exemple à partir d'une eau refroidie par un circuit de refroidissement semi-ouvert, comme ceux couramment utilisés dans les raffineries de pétrole, doit absolument être évité ou tout au moins réduit au maximum car :

- la couche de tartre devenant de plus en plus isolante en fonction de son épaisseur, celle-ci diminue l'efficacité de l'échange thermique de l'échangeur, tout en favorisant le piégeage des matières en suspension, réduisant ainsi le volume de circulation du fluide,
- le dépôt de tartre peut être responsable de problèmes de corrosion localisés sous ce même dépôt, et
- la couche de tartre peut à la longue entraîner l'obturation des tubes.

ETAT ANTERIEUR DE LA TECHNIQUE.

Pour éviter ces inconvénients, il existe plusieurs procédés de traitement préventifs, parmi lesquels on peut citer la déminéralisation de l'eau de refroidissement, ou l'ajout de produits antitartres, ou encore de produits dispersants. Tous ces procédés de lutte contre l'entartrage ont un coût et il est alors nécessaire de suivre aussi précisément et rapidement que possible, l'évolution du phénomène d'entartrage, car sa connaissance permettra de décider d'un éventuel traitement de l'eau sous ses aspects qualitatifs et quantitatifs.

En plus des essais destinés à tester l'efficacité des additifs antitartres sur des unités de petites grandeurs qui reproduisent au plus près les conditions de réfrigération couramment utilisées en milieu industriel, mais qui ont l'inconvénient majeur de durer plusieurs semaines et de mobiliser une personne à temps plein pour le suivi de ce test, on connaît des procédés plus rapides pour mesurer l'entartrage, essentiellement basés sur des procédés électrochimiques qui reposent sur la formation contrôlée d'un dépôt de carbonate de calcium par électrolyse de la solution entartrante.

C'est ainsi que la chronoampérométrie est une technique d'analyse couramment utilisée pour le suivi de l'entartrage, qui consiste à plonger dans l'eau à étudier une électrode de travail que l'on porte au potentiel optimum d'entartrage. Ce potentiel génère une augmentation locale du pH et facilite de ce fait l'entartrage. A ce potentiel correspond une valeur de l'intensité du courant de réduction de l'oxygène qui, avant l'entartrage, a une valeur nominale, cette valeur allant en décroissant à mesure que décroît la concentration en oxygène à proximité de l'électrode, suite à un recouvrement de cette électrode par le tartre. Le procédé de suivi consiste alors à tracer la courbe de variation de l'intensité en fonction du temps. Cette courbe est décroissante et présente un point d'inflexion. On peut caractériser le système eau-métal (électrode) en traçant la tangente au point d'inflexion et en relevant le temps d'entartrage correspondant à l'intersection de la tangente avec l'axe des abscisses. Plus ce temps est faible, plus l'eau est entartrante.

Un autre procédé électrochimique de suivi de l'entartrage est connu sous le nom de chronoélectrogravimétrie. Dans ce procédé, on utilise une microbalance constituée par une lame de quartz placée entre deux électrodes métalliques d'excitation qui font vibrer la lame de quartz par effet piézoélectrique. La fréquence de vibration de la lame diminue à mesure qu'un dépôt de tartre se forme à la surface d'une des électrodes excitatrices en contact avec le liquide entartrant. La masse de tartre $\Delta m$ déposée à chaque instant est liée à la différence $\Delta f$ entre la fréquence d'oscillation nominale de la lame et sa fréquence mesurée à cet instant par la relation :

$$\Delta m = -k\Delta f \qquad (1)$$

où k est un coefficient de proportionnalité qui dépend de l'épaisseur du quartz et de sa fréquence d'oscillation à vide.

Ainsi, la connaissance à chaque instant de la diminution de la fréquence permet de tracer la courbe de variation de la masse de tartre déposée en fonction du temps. Cette courbe est ascendante et tend vers une asymptote correspondant à une masse de tartre limite. A partir de cette courbe, on peut définir une vitesse d'entartrage et un temps d'entartrage. Plus la vitesse d'entartrage est élevée, plus l'eau est entartrante.

Plus récemment, d'autres procédés ont été utilisés, par exemple celui décrit dans US 5 201 215, pour mesurer à la fois le pouvoir entartrant d'un liquide en même temps que les variations de densité et de viscosité de ce liquide, ou encore celui décrit dans FR 2 743 634 pour suivre en continu le pouvoir entartrant d'une eau.

Tous ces procédés rapides actuellement disponibles sur le marché pour la détermination du pouvoir entartrant d'un liquide, ne permettent pas d'obtenir une mesure fiable et fidèle à la réalité industrielle. En effet, et comme indiqué précédemment, les quantités de tartre déposées, par exemple sur la paroi d'un tube d'échangeur thermique, dépendent de la température de l'eau circulant dans ce tube, mais aussi et principalement de la température de la surface du tube en contact avec ce liquide, cette dernière température pouvant présenter plusieurs dizaines de degrés d'écart avec celle du liquide. Or, les mesures de l'entartrage réalisées essentiellement par voie électrochimique ne sont pas représentatives des phénomènes thermiques observés directement sur les parois des tubes des échangeurs de chaleur.

Un procédé utilisant un quartz directement chauffé a été proposé par Mathias Roth et Associés (Sensors and Actuators, 1998, p. 399 à 403) pour constituer un détecteur chimique applicable exclusivement dans un milieu gazeux, sans application possible à la mesure de l'entartrage d'un milieu liquide.

Il est donc impossible aujourd'hui de quantifier précisément le phénomène d'entartrage, généralement observé dans un processus industriel de réfrigération, par exemple dans les tubes des échangeurs de chaleur d'une raffinerie de pétrole, dans lesquels circule une eau de réfrigération qui est soumise à différentes contraintes hydrodynamiques, et notamment une température relativement faible au sein de sa masse et nettement plus élevée à l'approche de la paroi des tubes servant à véhiculer cette eau de réfrigération. Ceci représente un sérieux inconvénient pour l'exploitant qui ne peut pas optimiser qualitativement et quantitativement ses traitements anti-tartre, par méconnaissance des quantités réelles de dépôts incrustées dans les parois des tubes d'échangeurs. De plus, aucun système de mesure du pouvoir entartrant disponible actuellement sur le marché, ne peut réaliser un suivi en continu de la parfaite évolution des quantités de tartre déposées.

La présente invention vise à remédier à ces inconvénients, notamment ceux résultant des procédés de mesures des quantités de tartre produites artificiellement par voie électrochimique et mesurées par l'utilisation de la microbalance à quartz, et qui ne sont pas représentatifs des conditions thermiques qui existent dans les échangeurs thermiques où l'eau peut être froide (25 à 35°C) à l'intérieur des tubes de l'échangeur et très chaude à proximité des tubes, par exemple 90°C, en lui apportant certains perfectionnements pour tenir compte des conditions thermiques réelles régnant dans les systèmes d'échange de chaleur.

## EXPOSE SOMMAIRE DE L'INVENTION

A cet effet, l'invention concerne un procédé de mesure du pouvoir entartrant d'un liquide au contact d'une paroi substantiellement plus chaude que le liquide, à l'aide d'une microbalance constituée d'une lame de quartz comprise entre deux électrodes d'excitation, dont l'une, appelée électrode de travail, est destinée à recueillir le tartre, ces électrodes permettant, par application d'une différence de potentiel, de faire vibrer la lame de quartz à une fréquence voisine de sa fréquence de résonance, le procédé étant caractérisé en ce qu'il consiste à :

- mettre en contact direct l'électrode de travail avec le liquide,
- isoler la deuxième électrode d'excitation par rapport au liquide,
- chauffer cette deuxième électrode par des moyens propres pour transmettre la chaleur à seulement l'électrode de travail, par conduction à travers la lame de quartz, pour se rapprocher des conditions réelles du transfert thermique à l'interface métal-liquide, et,
- mesurer en continu la variation de la fréquence de vibration au cours du temps.

Le procédé selon l'invention utilise de manière préférée une cellule dans laquelle circule en continu le liquide entartrant. Tout type de cellules peut être utilisé, notamment celles où le liquide circule perpendiculairement ou tangentiellement à l'électrode de travail.

Le mode de chauffage utilisé selon l'invention qui consiste à ne chauffer que l'électrode de travail, permet d'éviter la présence d'une source de chaleur à l'intérieur de la cellule, ce qui provoquerait un entartrage surfacique non maîtrisé en dehors de l'électrode d'excitation en contact avec le liquide, voire un entartrage en volume dans le liquide. Le mode de chauffage peut être obtenu par tout moyen permettant de concentrer la chaleur sur une faible zone telle la surface d'une électrode de la microbalance à quartz et, de préférence, par effet Joule directement sur l'électrode isolée du liquide.

La mesure de la température de l'électrode de travail peut être réalisée au moyen d'un thermocouple surfacique constitué de deux électrodes constituant ce thermocouple, déposées sur la face en contact avec le liquide de la microbalance. Avantageusement, on utilise pour l'une des électrodes du thermocouple l'électrode de travail, l'autre électrode étant constituée en un métal différent formant jonction avec l'électrode de travail.

La combinaison des moyens de mesure de la température par thermocouple directement installé sur l'électrode de travail, et de chauffage seulement sur l'électrode isolée du liquide, associée à une régulation électronique connue en soi, permet de maintenir l'électrode de travail à une température constante identique à celle du processus industriel.

L'invention peut également être mise en oeuvre pour la mesure du pouvoir entartrant d'un liquide sur différents types de surfaces, susceptibles de recouvrir l'électrode de travail afin de se rapprocher des conditions réelles d'entartrage.

L'invention concerne également une microbalance à quartz pour la mise en oeuvre du procédé décrit ci-dessus, du type comprenant une lame de quartz comprise entre une électrode d'excitation supérieure appelée électrode de travail et une électrode d'excitation inférieure, reliées à un oscillateur pour faire vibrer la lame de quartz à une de ses fréquences de résonance, caractérisée en ce qu'elle comporte en outre :

- des moyens de chauffage de l'électrode d'excitation inférieure,
- des moyens de mesure de température pour mesurer en continu la température de l'électrode de travail,
- des moyens de régulation du chauffage destinés à maintenir l'électrode de travail à une température constante égale à la température réelle d'utilisation du liquide,
- et des moyens de mesure de fréquence pour mesurer en continu la fréquence de vibration de la lame de quartz.

BREVE DESCRIPTION DES DESSINS

D'autres avantages et caractéristiques de l'invention ressortiront à la lecture de la description détaillée qui va suivre, faite en regard des dessins annexés dans lesquels :

- la figure 1 représente schématiquement, en vue en coupe selon la ligne I-I de la figure 2, une microbalance à quartz selon l'invention ;
- la figure 2 représente une vue de dessus de la microbalance à quartz de la figure 1, les électrodes de la face inférieure étant représentées en pointillés ;
- la figure 3 est une vue schématique en coupe verticale d'une cellule d'entartrage munie de la microbalance à quartz selon l'invention ;
- la figure 4 montre le schéma électrique de la cellule d'entartrage ;
- la figure 5 est une courbe représentant la variation de la fréquence d'oscillation de la lame de quartz en fonction du temps, et
- les figures 6a et 6b représentent une vue de dessus et une vue en coupe longitudinale d'un autre mode préféré de réalisation de la cellule d'entartrage.

DESCRIPTION DETAILLEE D'UN MODE DE REALISATION PREFERE.

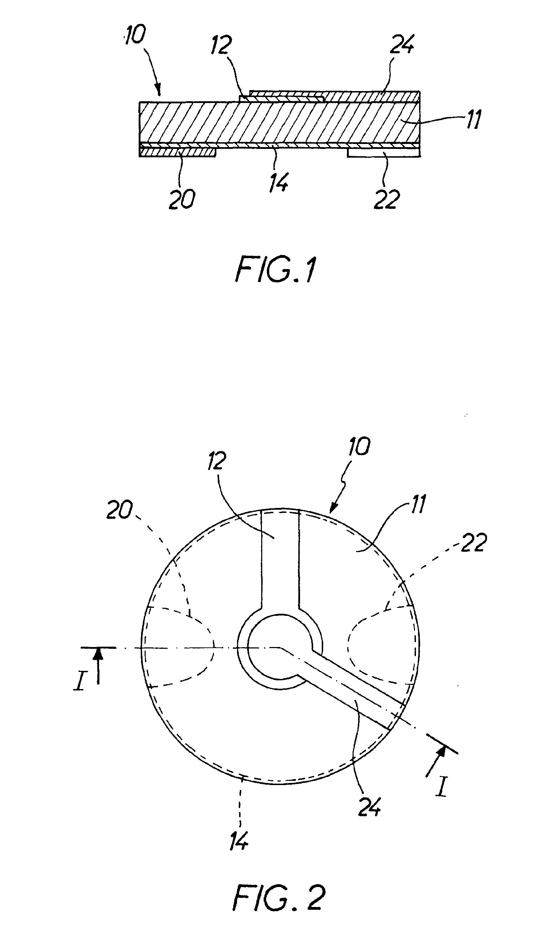

Comme le montrent les figures 1 et 2, la microbalance à quartz 10 comprend, de façon connue en soi, une lame de quartz 11 en forme de disque de quelques dixièmes de millimètre d'épaisseur et de quelques millimètres de diamètre. Sur les faces de la lame sont déposées une électrode d'excitation supérieure 12, ou électrode de travail, et une électrode d'excitation inférieure 14, l'une d'entre elles étant en or et l'autre en nickel. A ces électrodes est appliquée une différence de potentiel qui fait vibrer la lame de quartz à sa fréquence de résonance.

L'électrode d'excitation supérieure est utilisée comme électrode de travail, c'est-à-dire qu'elle est en contact avec le liquide dont on veut étudier le pouvoir entartrant, et de ce fait elle est le siège d'un dépôt de tartre dont l'évolution en masse provoque une variation de la fréquence de vibration du quartz.

La variation de la fréquence d'un quartz mince est liée à la masse déposée par unité de surface par la relation (1) susmentionnée. Le coefficient k est égal à $7,6.10^7$ Hz.cm$^2$/g pour un quartz de 0,28 mm d'épaisseur et oscillant à 6 MHz.

La microbalance à quartz décrite jusqu'à présent est bien connue dans la technique. Conformément à l'invention, certains perfectionnements lui sont apportés pour que la mesure du pouvoir entartrant du liquide puisse se faire dans des conditions proches des conditions réelles d'utilisation. L'un de ces perfectionnements consiste à chauffer la lame de quartz à une température voisine de la température réelle d'utilisation. Pour cela, la microbalance est pourvue d'un moyen de chauffage constitué par l'électrode excitatrice isolée 14 constituée d'un matériau résistif. Celle-ci est en contact de deux électrodes d'alimentation en courant 20, 22 en matériau conducteur dont le rôle est d'amener le courant dans l'électrode de chauffage.

Lorsque l'électrode de chauffage est parcourue par un courant d'intensité approprié, elle s'échauffe par effet Joule et communique sa chaleur à la lame de quartz 11 et à l'électrode de travail 12.

La microbalance à quartz est également équipée d'un thermocouple destiné à mesurer en continu la température de l'électrode de travail 12. Avantageusement, l'un des éléments du thermocouple est constitué par l'électrode d'excitation supérieure 12. L'autre élément du thermocouple est constitué par une électrode 24 en un métal formant jonction avec le métal de l'électrode d'excitation 12, par exemple le nickel si celle-ci est en or.

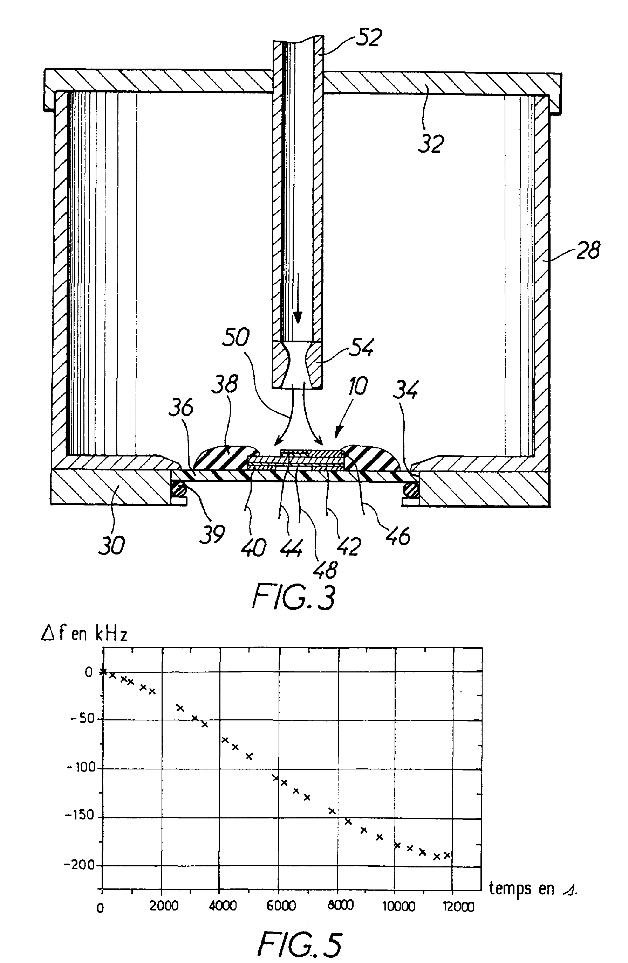

La figure 3 représente une cellule d'entartrage 28 dans laquelle sont effectuées avantageusement les mesures du pouvoir entartrant d'un liquide dans des conditions proches des conditions d'utilisation réelles. La cellule est fermée à sa base par un fond 30 et à son sommet par un couvercle 32. Dans le fond de la cellule est aménagée une ouverture 34 destinée à recevoir la microbalance 10. A cet effet, la microbalance est préalablement fixée sur une plaquette 36 en matière isolante de manière que sa face qui porte l'électrode d'excitation inférieure 14 et les électrodes d'alimentation en courant 20, 22 soit appliquée sur la plaquette. Cette face est maintenue écartée de la plaquette et est isolée du milieu extérieur par un joint annulaire isolant 38. La plaquette ainsi munie de la microbalance est fixée dans l'ouverture 34 de manière que la face de la microbalance qui porte l'électrode d'excitation supérieure 12 et le thermocouple 12, 24 soit tournée vers l'intérieur de la cellule. Un joint torique 39 assure l'étanchéité dans l'ouverture 34.

A travers la plaquette 36 passent de façon étanche deux fils de chauffage 40, 42 reliés aux électrodes d'alimentation en courant 20, 22, deux fils de thermocouple 44, 46 reliés aux électrodes de thermocouple 12, 24 et un fil d'excitation 48 relié à l'électrode d'excitation inférieure 14, l'autre fil d'excitation étant constitué par le fil de thermocouple 44.

Le liquide 50 dont on veut mesurer le pouvoir entartrant est amené dans la cellule par une conduite 52 à travers le couvercle 32 et est éjecté par une buse 54 sur la face supérieure de la microbalance. Le liquide s'écoule perpendiculairement à la microbalance et percute les électrodes de thermocouple 12, 24, tandis que la face inférieure de la microbalance reste au sec puisqu'elle est isolée par le joint 38.

Pour se rapprocher au maximum des conditions réelles d'utilisation, on injectera le liquide à une température voisine de celle qu'elle a dans le dispositif d'échange de chaleur à étudier. De même, on pourra recouvrir l'électrode de travail 12 d'une couche de la même matière que celle dans laquelle est réalisée la paroi du dispositif d'échange de chaleur.

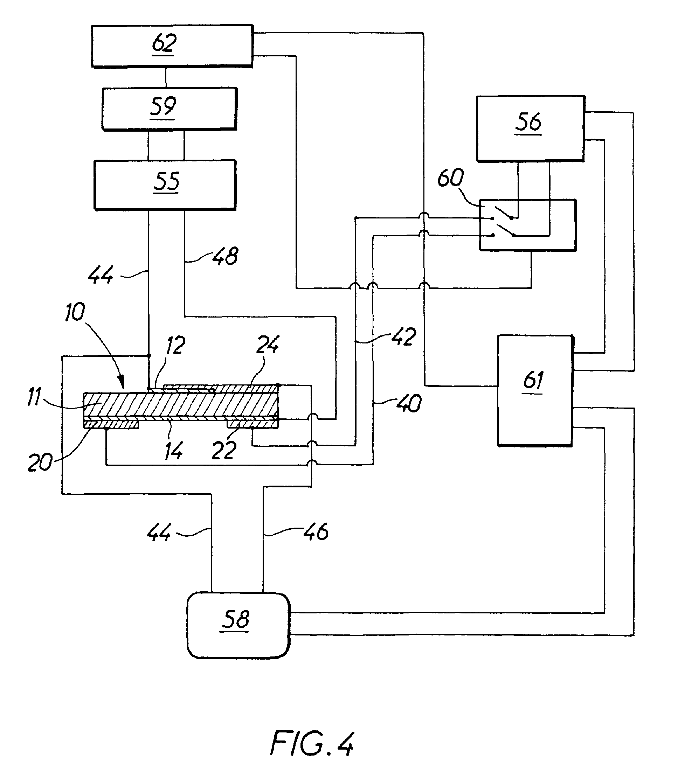

La figure 4 montre le schéma électrique de la cellule. Les électrodes d'excitation 12, 14 sont reliées à un oscillateur 55 par l'intermédiaire des conducteurs d'excitation 44, 48. Les électrodes d'alimentation en courant 20, 22 sont reliées à une alimentation de chauffage 56 par l'intermédiaire des conducteurs de chauffage 40, 42. Les électrodes de thermocouple 12, 24 sont reliées à un voltmètre 58. La fréquence d'oscillation de la lame de quartz est mesurée en continu par un fréquencemètre 59.

Pour permettre un fonctionnement simultané du circuit d'excitation piézoélectrique et du circuit de chauffage sans qu'ils interfèrent entre eux par l'électrode 12 qu'ils ont en commun, il est prévu des moyens de commutation 60 qui permettent de commuter ces deux circuits afin d'obtenir alternativement l'oscillation du quartz sans le chauffage et le chauffage du quartz sans l'oscillation. La mesure de la température est donc toujours accessible. Un régulateur 61 régule l'alimentation de chauffage 56 de manière que la température mesurée par le voltmètre 58 soit maintenue constante et égale à une valeur prédéterminée. Les moyens de commutation peuvent être commandés à distance par un ordinateur 62 et synchronisés sur la mesure de la fréquence.

La cellule d'entartrage fonctionne comme suit : à mesure que le liquide est projeté contre la face supérieure de la microbalance, l'électrode de travail 12 se recouvre d'une couche de tartre d'épaisseur croissante. Du fait de l'augmentation du poids de cette électrode, la fréquence d'oscillation du quartz diminue. La fréquence est mesurée en continu par le fréquencemètre 59.

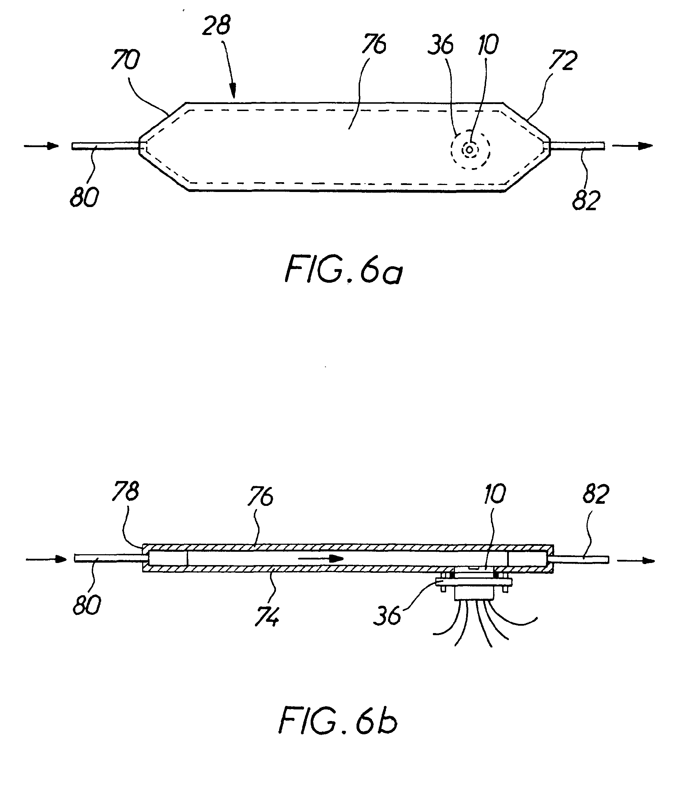

La figure 5 représente la courbe de variation de la diminution de la fréquence en fonction du temps. Cette courbe a été obtenue dans les conditions expérimentales suivantes :

- le quartz a une fréquence d'oscillation nominale de 6MHz,
- le flux de liquide est inversé, c'est-à-dire que la buse 54 aspire le liquide depuis le quartz et l'évacue à l'extérieur de la cellule 28,
- la température de la cellule est de 55°C,
- le débit de liquide est de 370 ml/min,
- la puissance de chauffage est 19,8 watts,
- le coefficient de sensibilité k du quartz à 6Mhz est de $7,5.10^7$ Hz.cm$^2$/g.

Cette courbe montre que sur une période de 3h20 mn la fréquence a diminué de 180 kHz, ce qui correspond, en reportant cette valeur dans la formule (1) susmentionnée, à une masse de tartre déposée de 2,4 mg/cm2.

Les figures 6a et 6b représentent une autre forme préférée de la cellule d'entartrage qui peut servir à mesurer le pouvoir entartrant d'un liquide dans d'autres conditions hydrodynamiques, par exemple pour d'autres types d'applications industrielles. Dans ce mode de réalisation, le liquide s'écoule tangentiellement sur l'électrode de travail.

Cette cellule 28 a une forme de parallélépipède rectangle plat et allongé. De préférence, la cellule se termine à ses extrémités, respectivement par une portion divergente 70 et par une portion convergente 72. Elle comporte une paroi horizontale inférieure 74, une paroi horizontale supérieure 76 et une paroi périphérique 78. Aux extrémités des portions divergente et convergente sont branchées respectivement une conduite d'entrée 80 par laquelle le liquide dont on veut mesurer le pouvoir entartrant est introduit dans la cellule et une conduite de sortie par laquelle le liquide est évacué de la cellule.

La paroi inférieure 74 présente, de préférence dans sa partie qui est voisine de la portion divergente, une ouverture dans laquelle est fixée de façon étanche une microbalance à quartz 10 montée sur une plaquette isolante 36, comme décrit précédemment.

Le liquide arrivant par la conduite d'entrée 80 s'écoule d'abord en un flux divergent dans la portion 70 pour occuper la totalité de la section de la cellule, puis en un flux parallèle et enfin en un flux convergent et sort par la conduite 82. Le liquide passe tangentiellement au-dessus de la microbalance.

Ainsi, l'utilisation de la microbalance à quartz selon l'invention a permis de mesurer en quelques heures le pouvoir entartrant d'un liquide, ce qui nécessitait auparavant plusieurs semaines pour des essais pratiqués, par exemple, sur des unités pilote. De plus, l'invention permet de mesurer l'entartrage thermique, qui est un entartrage plus près de la réalité industrielle, que celui mesuré jusqu'à maintenant, c'est-à-dire par voie électrochimique. La connaissance du pouvoir entartrant permet de déterminer le pouvoir inhibiteur de l'additif contenu dans le liquide. Grâce au chauffage du quartz sur sa face inférieure, on arrive à effectuer un entartrage thermique local, ce qui n'était pas possible avec les techniques de l'art antérieur.

De plus, ce chauffage local permet de reproduire la température réelle qui règne dans les échangeurs de chaleur.

La microbalance selon l'invention peut également servir à mesurer le pouvoir corrosif et le pouvoir oxydant d'un fluide, ou l'évolution d'une adsorption de différentes espèces chimiques sur une surface. On mesure pour cela, l'évolution de la diminution de la masse de l'électrode de travail ou l'évolution de son augmentation de masse.

## Revendications

1. Procédé de mesure du pouvoir entartrant d'un liquide au contact d'une paroi substantiellement plus chaude que le liquide, à l'aide d'une microbalance constituée d'une lame de quartz comprise entre deux électrodes d'excitation, dont l'une, appelée électrode de travail, est destinée à recueillir le tartre, ces électrodes permettant, par application d'une différence de potentiel, de faire vibrer la lame de quartz à une fréquence voisine de sa fréquence de résonance, le procédé étant **caractérisé en ce qu'**il consiste à :

   - mettre en contact direct l'électrode de travail avec le liquide,
   - isoler la deuxième électrode d'excitation par rapport au liquide,
   - chauffer cette deuxième électrode par des moyens propres pour transmettre la chaleur à seulement l'électrode de travail, par conduction à travers la lame de quartz, pour se rapprocher des conditions réelles d'utilisation du liquide, et,

   - mesurer en continu la variation de la fréquence de vibration au cours du temps.

2. Procédé selon la revendication 1, **caractérisé en ce que** la température de l'électrode de travail est mesurée en continu au moyen d'un thermocouple constitué de deux électrodes déposées sur la face de la lame de quartz qui porte l'électrode de travail.

3. Procédé selon la revendication 2, **caractérisé en ce que** les électrodes du thermocouple sont constituées par l'électrode de travail et une électrode en un métal différent formant jonction avec l'électrode de travail.

4. Procédé selon l'une des revendications précédentes, **caractérisé en ce que** l'électrode isolée du liquide est chauffée par tout moyen permettant de concentrer la chaleur sur une faible zone et, de préférence, par effet Joule directement sur l'électrode isolée du liquide.

5. Procédé selon l'une des revendications précédentes, **caractérisé en ce que** le chauffage de l'électrode d'excitation isolée du liquide est régulé de façon à maintenir la température de l'électrode de travail à une valeur égale à la température d'utilisation du liquide entartrant.

6. Procédé selon l'une des revendications précédentes, **caractérisé en ce que** la microbalance est disposée dans une cellule dans laquelle circule en continu le liquide entartrant.

7. Procédé selon l'une des revendications précédentes, appliqué à la mesure de l'entartrage d'une surface, **caractérisé en ce qu'**il consiste à recouvrir l'électrode de travail d'une couche de matière de nature identique à ladite surface, afin de se rapprocher des conditions réelles d'entartrage.

8. Microbalance à quartz (10) pour la mise en oeuvre du procédé selon l'une des revendications précédentes, du type comprenant une lame de quartz (11) comprise entre une électrode d'excitation supérieure appelée électrode de travail (12) et une électrode d'excitation inférieure (14) reliées à un oscillateur (55) pour faire vibrer la lame de quartz à une de ses fréquences de résonance, **caractérisée en ce qu'**elle comporte en outre :

   - des moyens de chauffage (20, 22, 56) de l'électrode d'excitation inférieure (14),
   - des moyens de mesure de température (12, 24, 58) pour mesurer en continu la température de l'électrode de travail (12),

- des moyens de régulation du chauffage (61) destinés à maintenir l'électrode de travail (12) à une température constante égale à la température réelle d'utilisation du liquide,
- et des moyens de mesure de fréquence (59) pour mesurer en continu la fréquence de vibration de la lame de quartz.

9. Microbalance selon la revendication 8, **caractérisée en ce que** l'électrode de travail (12) est en or.

10. Microbalance selon l'une des revendications 8 et 9, **caractérisée en ce que** l'électrode d'excitation inférieure (14) est constituée d'un matériau conducteur de la chaleur à forte résistivité, et de préférence en nickel.

11. Microbalance selon la revendication 8, **caractérisée en ce que** les moyens de mesure de la température sont constitués par un thermocouple comprenant deux éléments en métal formant jonction, fixés sur la face de la microbalance qui est en contact avec le liquide.

12. Microbalance selon la revendication 11, **caractérisée en ce que** l'un des éléments du thermocouple est constitué par l'électrode de travail (12).

13. Microbalance selon l'une des revendications 8 à 12, **caractérisée en ce que** l'autre élément (24) du thermocouple est en nickel.

14. Microbalance selon la revendication 8, **caractérisée en ce qu'**elle est fixée sur une plaquette (36) en matière isolante de manière que la face de la microbalance qui porte l'électrode d'excitation inférieure (14) et les moyens de chauffage (20, 22) soit appliquée sur la plaquette, soit maintenue écartée de ladite plaquette et soit isolée du milieu extérieur par un joint annulaire isolant (38).

15. Microbalance selon la revendication 14, **caractérisée en ce que** la plaquette munie de la microbalance est fixée dans une cellule d'entartrage (28), dans laquelle le liquide (50) dont on veut mesurer le pouvoir entartrant est injecté à une température voisine de la température d'utilisation, la microbalance étant orientée de manière que sa face qui porte l'électrode de travail (12) et les électrodes de thermocouple (12, 24), soient immergés dans le liquide, tandis que la face qui porte la seconde électrode d'excitation (14) et les électrodes de chauffage (20, 22) soit isolée par rapport au liquide.

16. Microbalance selon la revendication 15, **caractérisée en ce que** le liquide circule dans une direction perpendiculaire au plan de l'électrode de travail (12).

17. Microbalance selon la revendication 15, **caractérisée en ce que** le liquide circule tangentiellement à l'électrode de travail (12).

FIG.1

FIG.2

8

EP 1 217 359 A1

FIG.3

Δf en kHz

temps en .1.

FIG.5

9

FIG.4

70    28    76    36    10    72

80    82

# FIG.6a

78    76    10    82

80    74    36

# FIG.6b

**European Patent Office**

## EUROPEAN SEARCH REPORT

Application Number

EP 01 40 3308

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,Y | FR 2 743 634 A (INST FRANCAIS DU PETROL) 18 July 1997 (1997-07-18) * the whole document * | 1,8 | G01N27/00 |
| Y | US 3 478 573 A (KING WILLIAM H JR) 18 November 1969 (1969-11-18) * column 1, line 25 - line 49 * | 1,8 | |
| A | EP 0 676 637 A (CENTRE NAT RECH SCIENT) 11 October 1995 (1995-10-11) * abstract; figure 1 * | 1 | |
| D,A | US 5 201 215 A (GRANSTAFF VICTORIA E ET AL) 13 April 1993 (1993-04-13) * the whole document * | 1 | |
| | | | **TECHNICAL FIELDS SEARCHED (Int.Cl.7)** |
| | | | G01N |

The present search report has been drawn up for all claims

| Place of search | Date of completion of the search | Examiner |
|---|---|---|
| THE HAGUE | 11 April 2002 | Duchatellier, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 1 217 359 A1**

**ANNEX TO THE EUROPEAN SEARCH REPORT
ON EUROPEAN PATENT APPLICATION NO.**    EP 01 40 3308

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2002

| Patent document cited in search report | | | Publication date | Patent family member(s) | | Publication date |
|---|---|---|---|---|---|---|
| FR 2743634 | A | | 18-07-1997 | FR | 2743634 A1 | 18-07-1997 |
| | | | | EP | 0785427 A1 | 23-07-1997 |
| | | | | JP | 9236579 A | 09-09-1997 |
| US 3478573 | A | | 18-11-1969 | CH | 479965 A | 15-10-1969 |
| | | | | DE | 1598401 A1 | 29-10-1970 |
| | | | | FR | 90665 E | 26-01-1968 |
| | | | | GB | 1094677 A | 13-12-1967 |
| | | | | NL | 6610729 A ,B, | 30-01-1967 |
| | | | | US | 3531663 A | 29-09-1970 |
| EP 0676637 | A | | 11-10-1995 | FR | 2718530 A1 | 13-10-1995 |
| | | | | EP | 0676637 A1 | 11-10-1995 |
| | | | | JP | 8101110 A | 16-04-1996 |
| US 5201215 | A | | 13-04-1993 | NONE | | |

EPO FORM P0459

For more details about this annex : see Official Journal of the European Patent Office, No. 12/82

13